# EUROPEAN PATENT APPLICATION

(11) **EP 4 282 577 A1**
(43) Date of publication of application: **29.11.2023**
(21) Application number: 22175546.5
(22) Date of filing: 25.05.2022
(51) Int. Cl.: B23P 19/04, B23P 19/10, B66C 23/70, B23K 37/04

(54) **SYSTEM AND METHOD FOR CRANE BOOM ASSEMBLY**

(71) Applicant: KSK Kanten Schweißen Komponenten GmbH, 58239 Schwerte (DE)
(72) Inventor: Andree, Jürgen, 44534 Lünen (DE); Krotzin, Ralf, 44892 Bochum (DE); Di Lonardo, Filippo, 58097 Hagen (DE)
(74) Representative: De Clercq & Partners

(57) **Abstract**

The present disclosure relates to systems and methods for assembly of a crane boom segment for a telescopic crane. Specifically, an assembly station comprising a welding device, a support, and one or more fixing devices is provided to assist in assembling and fixing of crane boom segment components into a crane boom segment.

## Description

### FIELD OF THE INVENTION

The present disclosure relates to systems and methods for assembly of a crane boom segment for a telescopic crane. Specifically, an assembly station comprising a welding device, a support, and one or more fixing devices is provided to assist in assembling and fixing of crane boom segment components into a crane boom segment.

### BACKGROUND

Telescopic cranes are composed of extendable crane booms which can handle heavy loads and can be extended to great heights. Common crane boom designs employ hollow boom sections with rectangular, trapezoidal, triangular cross or other shapes of symmetrically cross-sectional segment sections. The boom sections are manufactured in increasingly smaller cross-sections fitting into each other.

Manufacturing of crane boom segments is a time-consuming and laborious task performed in multiple steps. In a first step, typically two or more components are produced. These components may for example include a half-shell that has a back wall and two standing walls, or alternatively a curved back wall, depending on the desired shape. Typically, these components are made from structural steel plates having a minimum thickness so that the boom would not easily buckle and become plastically deformed. To further increase the strength of these booms, stiffeners can be added to the side walls of the booms so as to increase the shear carrying capacity of the side walls.

In a further step, these components are assembled into a crane boom segment and subsequently welded together. However, the crane boom segment assembly requires a very accurate fitting of components so as to ensure structural stability of the crane boom. At present crane boom assembly comprises manual labour that typically requires a team effort of two or more skilled workers. Efforts have been made to semi-automatise the assembly process but so far have failed to meet industry standards in terms of time/cost efficiency while maintaining the same level of accuracy of manual labour due to the assembly complexity. Moreover, prior art tools and equipment are insufficient to reduce the worker discomfort, strain, and fatigue to prevent work-related injuries.

Accordingly, there is a need for a system suitable for crane boom assembly which is simple and easy to use, meets industry standards and can improve workplace ergonomics. There is also a need for system with easily controllable for supporting the crane boom assembly in such a way that it can be performed by a reduced number of workers, preferably only a single worker.

### SUMMARY OF THE INVENTION

As described above, there is a need to remedy the issues and limitations of state of art systems and method for crane boom assembly. The present disclosure relates to systems and methods for manufacturing of a crane boom segment for a telescopic crane. More specifically, an assembly station comprising a welding device, a support, and one or more fixing devices is provided to assist in assembling and fixing of crane boom segment components into a crane boom segment.

In state of art crane boom manufacturing lines welding of an upper component to a lower component to create a crane boom segment is a tedious and labour-intensive task as it involves several operators (e.g., two or more skilled operators) for the setup, execution and supervision of such activities. Such activities being particularly straining due to the level of complexity of the setup for welding procedures of welded booms, and are further exacerbated by lack of cost-effective automation and ergonomic provisions ultimately compromising the quality of the welded crane boom segment, leading to worker discomfort, strain, and ultimately work-related injuries.

Herein are disclosed systems and methods for the welding of crane boom segments which enables assisted welding of crane booms by an operator, which in turn reduces the need for multiple operators executing the work of setup, execution and supervision of the welding activities. Also, the herein disclosed systems and methods may enable at least partial automatization of manual labour, reduce work related incidents and improve workplace ergonomics. The operator as used herein may refer to a person operating said assembly station during assembly of a crane boom segment. In a preferred embodiment the present assembly station may be operated by a single operator, which is advantageous over state of art stations that require the presence of multiple operators, e.g., two or more, to handle the labour.

An aspect of the present disclosure relates to a method for assembly of a crane boom segment 20 for a telescopic crane, the method comprising at least the steps of:
a. providing at least two components of a crane boom segment 20, including a lower component 21 and an upper component 22, each component 21, 22 having at least a back wall extending into a pair of oppositely disposed side walls;
b. placing the lower component 21 on a longitudinally extending base 40 in such a way that its side walls are oriented upwards;
c. positioning at least one longitudinal fixing device 50 centrally along the base 40, wherein said longitudinal fixing device 50 comprises at least one longitudinal clamping device 521; and fixing the lower component's back wall with said longitudinal clamping device 521;
d. positioning a pair of lateral fixing devices 60, preferably symmetrically, on opposite lateral sides of the base 40, each lateral fixing device 60 comprising a moveably arranged support arm 61 comprising a lower longitudinal clamping device 621 that has an extendable pressure piece 6210 and an upper longitudinal clamping device 622 that has another extendable pressure piece 6220; wherein each lateral fixing device 60 is positioned in such a way that its lower lateral clamping device 621 is aligned with the lower component's side wall; and
   extending the pressure piece 6210 from the opposite lower lateral clamping devices 621 against an exterior surface of said lower component's side wall so that the lower component 21 is fixed in place;
e. placing the upper component 22 onto the fixed lower component 21 in such a way that its side walls are oriented downwards and aligned with the upwards oriented lower component's side walls;
f. positioning, preferably another, longitudinal fixing device 50 centrally along the base 40, and fixing the upper component's back wall with, preferably another, longitudinal clamping device 522;
g. adjusting the distance between the lower lateral clamping device 621 and the upper lateral clamping device 622 along the support arm 61 in such a way that said upper lateral clamping device 622 is aligned with the upper component's side wall; and
   extending the pressure piece 6220 from opposite upper lateral clamping devices 622 against an exterior surface of said upper component's side wall so that the upper component 22 is fixed in place;
h. pressing the upper component 22 against the lower component 21, preferably with the least one longitudinal fixing device 50;
i. adjusting the pressure pieces 6220, 6210 of opposite upper 622 and lower 621 clamping devices in such a way that an interior surface of the upper component's side walls aligns with an interior surface of the lower component's side walls; and,
j. welding or tack welding, the upper component's side walls to an adjoining portion of the lower component's side walls to produce a welded or tack welded crane boom segment 20.

A further aspect of the present disclosure relates to an assembly station 10 for assisted assembly of a crane boom segment 20 for a telescopic crane, said segment 20 comprising of at least two components, including an upper component 22 and lower component 21, each component having at least a back wall extending into a pair of oppositely disposed side walls; the assembly station 10 comprising:
- a longitudinally extending base 40 configured to support the crane boom segment 20;
- a lifting device configured for placing the lower component 21 onto the base 40 and/or the upper component 22 onto the lower component 21;
- at least one longitudinal fixing device 50 positioned centrally along the base 40 and comprising at least one longitudinal clamping device 521, 522 configured for fixing of at least one component's back wall;
- at least one pair of lateral fixing devices 60 positioned, preferably symmetrically, opposite on lateral sides of the base 40;
   each lateral fixing device 60 comprising a moveably arranged support arm 61 comprising a lower longitudinal clamping device 621 that has an extendable pressure piece 6210 and an upper longitudinal clamping device 622 that has another extendable pressure piece 6220;
   wherein the distance between said lower and upper clamping devices 621, 622 is adjustable along the length of said support arm 61 so that the lower longitudinal clamping device 621 can be aligned with the lower component's side wall and the upper longitudinal clamping device 622 can be aligned with the upper component's side wall;
   wherein the pressure pieces 6210, 6220 from opposite lateral clamping devices 621, 622 are configured to extend against an exterior surface of each component's opposite side walls so that the lower and upper components 21, 22 can be fixed in place and an interior surface of the upper component's side walls can be aligned with an interior surface of the lower component's side walls;
- a welding or tack welding device 30 configured for welding or tack welding the upper component's side walls to an adjoining portion of the lower component's side walls to produce a welded or tack welded crane boom segment 20.

A further aspect of the present disclosure relates to a use of the herein disclosed assembly station 10 for assisted assembly of a crane boom segment 20 for a telescopic crane, said segment 20 comprising of at least two components, including a lower component 21 and an upper component 22.

In some embodiments the longitudinally extending base 40 comprises a lifting means configured to adjust the height of said adjustable base to a level enabling an operator to access the adjoining portion of the lower and upper component's side walls.

In some embodiments the longitudinal fixing device 50 comprises a support arm 51 provided with at least two clamping device 522 configured for fixing a component's back wall at two points, preferably positioned on the same plane parallel to the longitudinally extending base 40.

In some embodiments the longitudinal fixing device 50 comprises a height adjustment mechanism 52 configured for adjusting the height of at least one clamping device 522; preferably wherein the support arm 51 is mounted onto said height adjustment mechanism 52.

In some embodiments the longitudinal fixing device 50 comprises a height adjustment mechanism 52 configured for adjusting the height of at least one longitudinal clamping device 521, 522; preferably so that the upper component's back wall can be fixed with said clamping device 521, 522.

In some embodiments the longitudinal fixing device 50 comprises a height adjustment mechanism 52 configured for pressing the upper component 22 against the lower component 21 through the least one longitudinal clamping device 521, 522.

In some embodiments the longitudinal fixing device 50 comprises a repositionable base 55 configured for repositioning of said fixing device 50 centrally along the base 40, preferably along the length of the base 40.

In some embodiments the assembly station 10 comprises at least one pair of longitudinal fixing devices 50 positioned symmetrically opposite on longitudinal sides of the base 40, preferably at a front end and a rear end of a component, wherein at least one longitudinal fixing device 50 is configured for fixing the lower component's back wall and at least one longitudinal fixing device 50 is configured for fixing the upper component's back wall.

In some embodiments the lateral fixing device 60 comprises a moveable base 65 equipped with movement elements configured for moving the position of said fixing device 60 relative to the longitudinally extending base 40, preferably along the length of the base 40.

In some embodiments the lateral fixing device 60 comprises a moveable base that can be mounted on a guide track running alongside the length of the base 40, preferably running parallel thereto.

In some embodiments the lateral fixing device 60 comprises a coarse adjustment mechanism 66 configured to adjust the position of the lateral fixing device 60 relative to the moveable base 65 in the transverse direction; preferably towards or away from the crane boom segment 20.

In some embodiments the lateral fixing device 60 comprises a braking device configured to secure the position of the lateral fixing device 60, preferably by blocking movement of the movement elements.

In some embodiments the assembly station 10 comprises at least two pairs of lateral fixing devices 60 positioned, preferably symmetrically, opposite along the longitudinally extending base 40, wherein a first fixing device pair 60 is positioned near the front end of said base 40, a second fixing device pair 60 is positioned near the rear end of said base 40.

In some embodiments the assembly station 10 comprises at least three pairs of lateral fixing devices 60 positioned, preferably symmetrically, opposite along the longitudinally extending base 40, wherein a first fixing device pair 60 is positioned near the front end of said base 40, a second fixing device pair 60 is positioned near the rear end of said base 40, and a third fixing device pair 60 is positioned about halfway between the front and rear ends of said base 40.

In some embodiments the assembly station 10 comprises a pressing device, preferably a hydraulic press, configured for pressing the upper component 22 and against the lower component 21 after being fixed in place.

In some embodiments the welding device 30 comprises a reaction arm 35 configured to move said welding device 30 throughout the assembly station 10 and further operate said welding device 30 during the, preferably tack, welding process.

In some embodiments the welding device 30 comprises a marking device, preferably a line monitor laser, configured for marking the position of a desired tack weld, and said welding device 30 is configured for automated tack welding at the positioned marked by said marking device.

In some embodiments the welding device 30 comprises a camera configured to produce a video output of the welding device 30 and/or marking device; and wherein said welding device 30 and/or marking device are configured to be remotely controlled based on said video output.

It is understood that any embodiment of the herein disclosed assembly station for assisted assembly of a crane boom segment for a telescopic crane, also constitutes an embodiment of the method for assembly of such crane boom segment for a telescopic crane, or the use of said assembly station for assisted assembly of a crane boom segment for a telescopic crane.

### DESCRIPTION OF THE FIGURES

The following description of the figures of specific embodiments of the disclosure are merely exemplary in nature and is not intended to limit the present teachings, their application or uses.

Throughout the drawings, the corresponding reference numerals indicate the following parts and features: assembly station 10; crane boom segment 20; lower component 21; upper component 22; welding device 30; reaction arm 35; longitudinally extending base 40; support 41; lifting device 45; longitudinal fixing device 50; support arm 51; height adjustment mechanism 52; lower longitudinal clamping device 521; upper longitudinal clamping device 522; repositionable base 55; lateral fixing device 60; support arm 61; lower lateral clamping device 621; lower extendable pressure piece 6210; upper lateral clamping device 622; upper extendable pressure piece 6220; moveable base (65); coarse adjustment mechanism (66).
FIG. 1 is a perspective view of a preferred embodiment of an assembly station 10.
**FIG 2A** is a perspective view of exemplary lower 21 and upper component 22 components of a crane boom segment 20.
**FIG 2B** is a perspective view of an exemplary crane boom segment 20 assembled from the components shown in **FIG.2A****.**
**FIG 3** is a side view of the assembly station 10 of **FIG.1****.**
**FIG. 4A** is a perspective view of a section along line A-A of the assembly station 10 of **FIG.1****.**
**FIG. 4B** is a cross-section along line A-A of the assembly station 10 of **FIG.4A****.**
**FIG. 5A** is a perspective front view of a preferred embodiment of a longitudinal fixing device 50.
**FIG. 5B** is side view of the longitudinal fixing device 50 of **FIG. 5A****.**
**FIG. 5C** is a top view of the longitudinal fixing device 50 of **FIG. 5A****.**
**FIG. 6** is a perspective view of another embodiment of a longitudinal fixing device 50.
**FIG. 7A** is a top view of a preferred embodiment of a lateral fixing device 60.
**FIG. 7B** is a cross-section along line B-B of the lateral fixing device 60 of **FIG. 7A****.**
**FIG. 7C** is a perspective rear view of the lateral fixing device 60 of **FIG. 7A****.**
**FIG. 8A** is a back view of a preferred embodiment of a lateral fixing device 60.
**FIG. 8B** is a side perspective view of the lateral clamping device 621 that is part of the lateral fixing device 60 of **FIG. 8A****.**
**FIG. 8C** is a side perspective view of a coarse adjustment mechanism 66 that is part of the lateral fixing device 60 of **FIG. 8A****.**
**FIG. 8D** is a perspective view of a moveable base 65 that is part of the lateral fixing device 60 of **FIG. 8A****.**

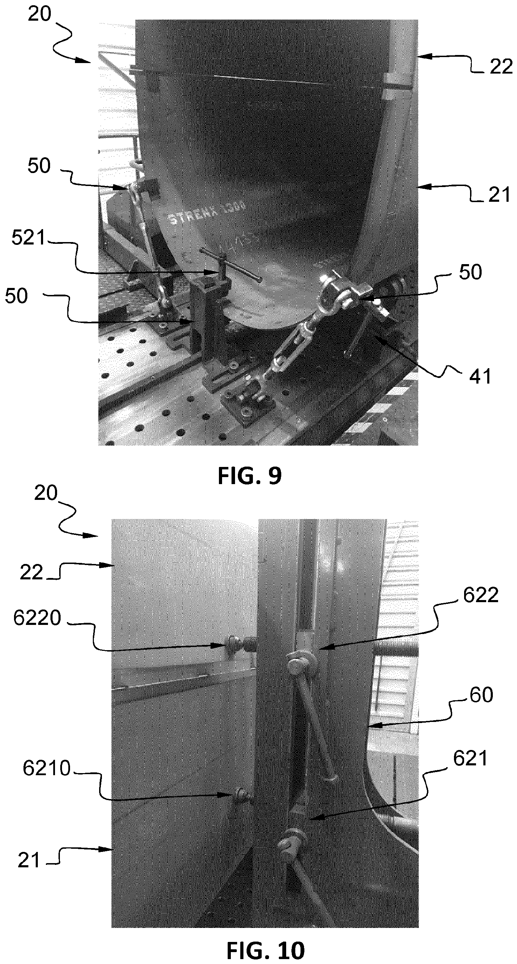

**FIG. 9** is an example of a crane boom segment 20 being fixed in place by a longitudinal fixing device 50.
**FIG. 10** is an example of a crane boom segment 20 being fixed in place by a lateral fixing device 60.

### DETAILED DESCRIPTION

The present disclosure will be described with respect to particular embodiments, but the disclosure is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps.

The recitation of numerical ranges by endpoints includes all numbers and fractions subsumed within the respective ranges, as well as the recited endpoints.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Unless otherwise defined, all terms used in disclosing the invention, including technical and scientific terms, have the meaning as commonly understood by one of ordinary skill in the art to which this disclosure belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the following claims and description, any of the claimed or described embodiments can be used in any combination.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments described herein are, for example, capable of operation in other orientations than those illustrated or otherwise described herein. The term "coupled," as used herein, is defined as directly or indirectly connected in an electrical or nonelectrical (i.e. physical) manner Objects described herein as being "adjacent to" each other may physically contact each other, be near each other without physical contact, or be generally in the same area as each other, as would be appropriate for the context in which the phrase is used. Occurrences of the phrase "in one embodiment," or "in one aspect," herein do not necessarily all refer to the same embodiment or aspect.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint. Unless otherwise stated, use of the term "about" in accordance with a specific number or numerical range should also be understood to provide support for such numerical terms or range without the term "about". For example, for the sake of convenience and brevity, a numerical range of "about 50 angstroms to about 80 angstroms" should also be understood to provide support for the range of "50 angstroms to 80 angstroms." Furthermore, it is to be understood that in this specification support for actual numerical values is provided even when the term "about" is used therewith. For example, the recitation of "about" 30 should be construed as not only providing support for values a little above and a little below 30, but also for the actual numerical value of 30 as well.

Reference in this specification may be made to devices, structures, systems, or methods that provide "improved" performance. It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components may be utilized to implement the invention. For example, "servers" and "computing devices" described in the specification can include one or more processing units, one or more computer-readable medium modules, one or more input/output interfaces, and various connections (e.g., a system bus) connecting the components.

To provide a solution to the above-described problems in the art, the present disclosure relates to systems and methods for manufacturing of a crane boom segment for a telescopic crane. More specifically, an assembly station comprising a welding device, a support, and one or more fixing devices is provided to assist in assembling and fixing of crane boom segment components into a crane boom segment.

In state of art crane boom manufacturing lines welding of an upper component to a lower component to create a crane boom segment is a tedious and labour-intensive task as it involves several operators (e.g., two or more skilled operators) for the setup, execution and supervision of such activities. Such activities being particularly straining due to the level of complexity of the setup for welding procedures of welded booms, and are further exacerbated by lack of cost-effective automation and ergonomic provisions ultimately compromising the quality of the welded crane boom segment, leading to worker discomfort, strain, and ultimately work-related injuries.

Herein are disclosed systems and methods for the welding of crane boom segments which enable assisted welding of crane booms by an operator, which in turn reduces the need for multiple operators executing the work of setup, execution and supervision of the welding activities. Also, the herein disclosed systems and methods may enable at least partial automatization of manual labour, reduce work related incidents and improve workplace ergonomics.

The operator as used herein may refer to a person operating said assembly station during assembly of a crane boom segment. In a preferred embodiment the present assembly station may be operated by a single operator, which is advantageous over state of art stations that require the presence of multiple operators, e.g., two or more, to handle the labour.

As will become clear from the present disclosure, it is further advantage of the herein disclosed systems and methods to enable a more accurate alignment of the interior surfaces of two adjoining components, specifically alignment of an interior surface of an upper component's side wall with an interior surface of a lower component's side wall, so as to ensure structural stability of the manufactured crane boom. Such accurate interior surface alignment is more difficult to realise in state of art crane boom manufacturing lines resulting in a greater need of post manufacturing straightening processes.

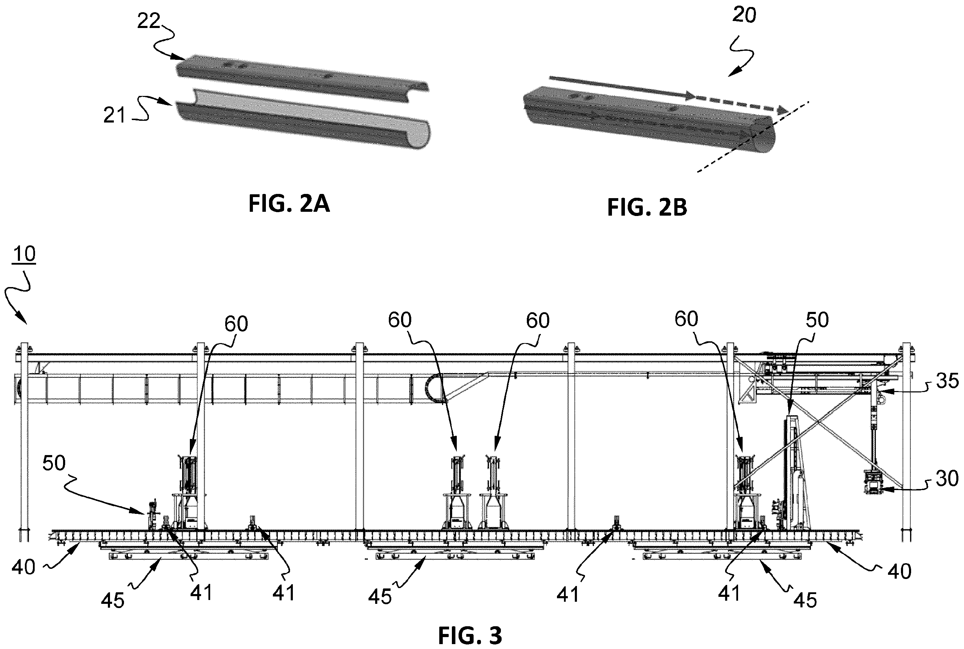

As used herein, crane boom refers to a telescopic crane consisting of a sequence of extendable crane boom segments fitting into each other. Crane boom designs commonly employ hollow segments with rectangular, trapezoidal, triangular cross or other shapes of symmetrically cross-sectional segment sections. Crane boom segments may comprise of two or more components that are fixed to each other. Typically, these boom components are produced with a convex-concave section extending lengthwise. An example of crane boom components is illustrated in **Figure 2A** of the present disclosure, specifically a lower component 21 and an upper component 22 positioned above said lower component 21.

In an embodiment the lower or upper components may have a back wall and two standing walls, or alternatively a curved back wall, depending on the desired shape and application of the crane boom. With reference to **Figure 2A****,** an exemplary lower component 21 is shown to have a curved back wall and an exemplary upper component 22 has a flat back wall. In a particular embodiment the curved back wall may have a U-shape with a predetermined angle among the walls of the half-shells. The skilled person understands that, depending on the desired shape and application of the crane boom, the configuration of the segment and its components can be easily adapted.

Crane boom segment can be characterised by one or more dimensional values relevant for the selected geometrical shape. For ease of explanation, the body of a crane boom segment will be considered as a hollow, open-ended cylindrical tube. Such crane boom segment will have a specific length and diameter as dimensional values for its exterior and interior surfaces. The "exterior" of a hollow crane boom segment is used herein to refer to the outside of said segment, for example, when referring to the exterior surface or the exterior wall. The opposite is true for the "interior", i.e., the inside of said segment or being situated on the inside of said segment. The difference in diameter between the interior and exterior will typically be equal to the width of the walls of said crane boom segment.

Further, it is common to characterise a crane boom segment by one or more geometric values relevant for the selected geometrical shape. For the same exemplary hollow, open-ended, cylindrical crane boom segment the geometric characteristics may include the flatness, waviness, twist, bow, camber, and any other geometric characteristics that could be regarded as relevant for the manufacturing quality. The geometric characteristics may be limited to a specific section of said segment, such as the flatness of a specific side wall, cross-section, or surface area of said crane boom, or the angle of a specific corner or camber.

Nonetheless, it should be appreciated that in actual practice crane boom segments do not have a simple geometrical shape, but typically have a more complex, possibly even non-symmetrical, design. For example, as illustrated in **Figure 2B****,** a crane boom segment may be composed of a lower component 21 with a curved back wall and an upper component 22 with a flat back wall to create the desired shape. As is shown, said upper component 22 and lower component 21 extend into a pair of oppositely disposed side walls aligned along the interior side wall. Division of such crane boom into one or more geometric values specific for each component may be contemplated. Likewise, such design may require additional dimensional values to be considered for each section and/or component, such as angles between the flat walls or the curvature of the curved walls, as will become clear throughout the present disclosure.

An initial overview of various aspects of the disclosure is provided below and specific embodiments are then described in further detail. This initial overview is intended to aid readers in understanding the technological concepts more quickly, but is not intended to identify key or essential features thereof, nor is it intended to limit the scope of the claimed subject matter. The skilled person understands that the various aspects can be combined unless otherwise stated. As such, any specific embodiment of a specific aspect may be understood to constitute a specific embodiment of another aspect without the explicitly discussion thereof. For example, an embodiment of the device as described below also forms an embodiment for the manufacturing of said device, the use of said device, and so on.

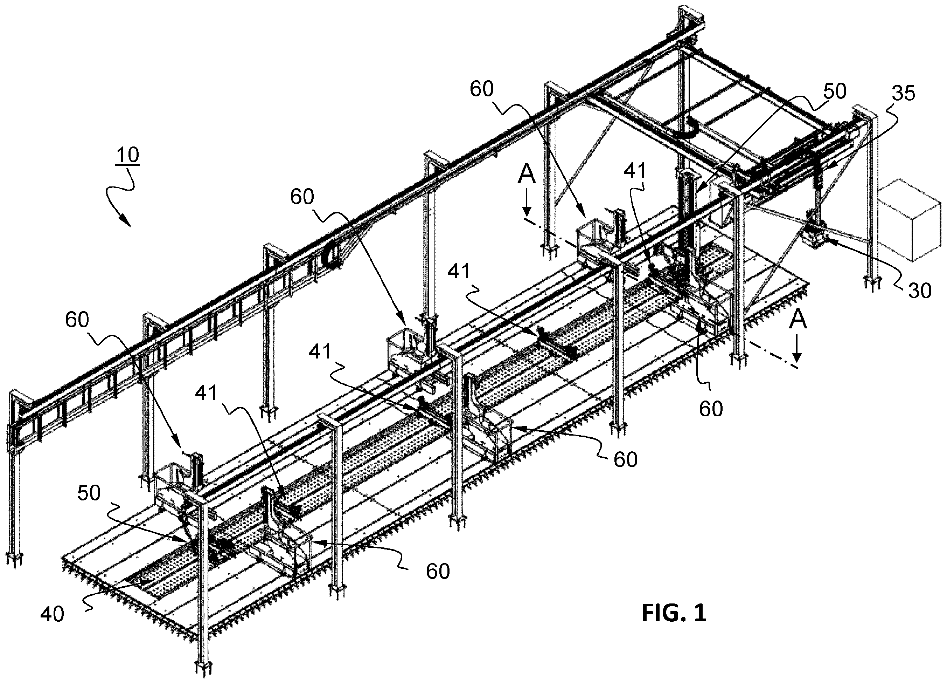

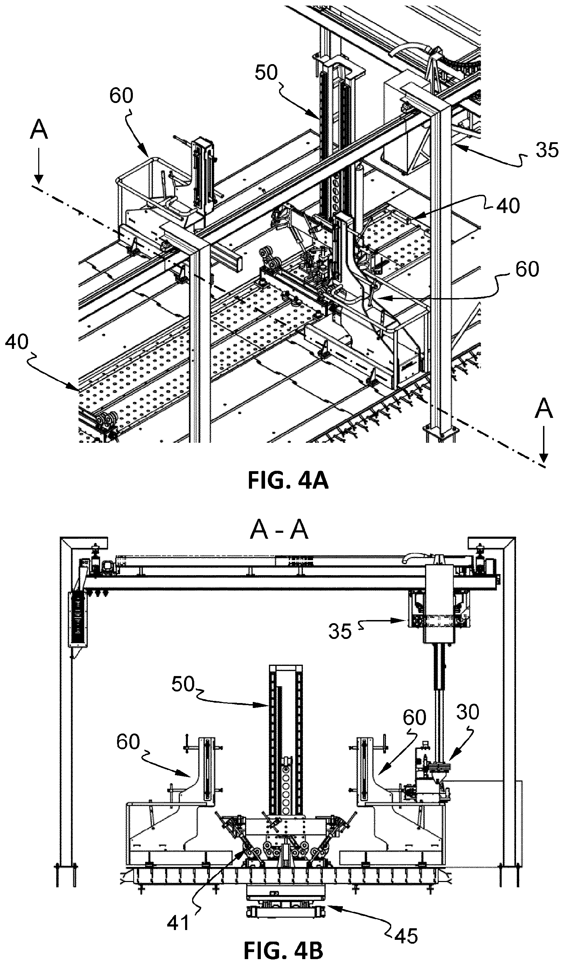

With reference to **Figure 1****,** a preferred embodiment is shown of a system 10 for assisted assembly of a crane boom segment 20 for a telescopic crane (not shown in this figure), referred to hereinafter as an assembly system 10. **Figure 3** shows a side view of the same assembly station 10. Additionally, to provide a better view of specific features positioned along line A-A of the assembly station 10 depicted in **Figure 1****,** **Figure 4A** shows a version of said assembly station 10 zoomed in along said line and **Figure 4B** shows a cross-section thereof.

As shown in **Figure 1****,** the depicted assembly station 10 comprises a longitudinally extending base 40 configured to support the crane boom segment 20 along its length, preferably, by being configured to support said lower component 21. As better shown in **Figure 3****,** the base 40 has a surface onto which the crane boom segment 20 can be placed, specifically the lower component 21 during assembly. The surface may be flat or curved to accommodate the geometrical shape of the lower component 21.

Referring back to **Figure 1****,** the depicted assembly station 10 is shown to comprise a number of fixing devices 50 configured for fixing the crane boom segment 20 in the longitudinal direction, referred to hereinafter as longitudinal fixing devices 50. Preferably, the lateral fixing device 60 may be configured for fixing a back wall of at least one upper component 22 and/or lower component 21 of said crane boom segment 20. The skilled person understands that different embodiments of the longitudinal fixing devices 50 may be provided for when said component have flat back wall, curved wall or any combination thereof. As better shown in Figure 3, the longitudinal fixing devices 50 advantageously may be arranged in pairs positioned preferably symmetrically on opposite longitudinal sides of the longitudinally extending base 40, such as the front and the rear ends. Preferably, at least one pair of longitudinal fixing devices 50 may comprise two fixing devices 50 that are both positioned at an end of the crane boom segment 20, specifically an end of the upper component 22 and lower component 21, whereby both fixing devices 50 are oriented to face each other, in line with the longitudinally extending base 40, ultimately providing support to said lower component 21 and upper component 22 so that a steady alignment can be realised in the longitudinal direction. A clear view of a longitudinal fixing device 50 oriented to face the longitudinally extending base 40 is shown in **Figure 4B****.**

Referring yet again to **Figure 1****,** the depicted assembly station 10 is shown to comprise a number of fixing devices 60 configured for fixing the crane boom segment 20 in the lateral direction, referred to hereinafter as lateral fixing devices 60. Specifically, the lateral fixing device 60 may be configured for fixing a side wall of at least one upper component 22 and/or lower component 21 of said crane boom segment 20.

As better shown in **Figure 4A****,** the lateral fixing devices 60 advantageously may be arranged in pairs positioned preferably symmetrically on opposite lateral sides of the longitudinally extending base 40, such as the right and the left sides. Advantageously, at least one pair of lateral fixing devices 60 may comprise two fixing devices 60 that are both positioned along the length of the crane boom segment 20, specifically along a side wall of the upper component 22 and lower component 21, whereby both fixing devices 60 are oriented to face each other, perpendicular to the length of the longitudinally extending base 40, ultimately providing lateral support to said lower component 21 and upper component 22 so that a steady alignment can be realised. A clearer view of this symmetrical arrangement is shown in **Figure 4B****.** Referring yet again to **Figure 1****,** the depicted assembly station 10 is shown to comprise a welding device 30 configured for welding components to manufacture a crane boom segment 20, for example, by welding an upper component 22 to an adjoining portion of a lower component 21 to produce a welded crane boom segment 20. However, as will become clear throughout the present disclosure, the assembly station is preferably configured for tack-welding that provides a temporary, *i.e*., non-final weld that holds together the crane boom segment prior to final welding. Optionally, the tack welding may ensure that the assembled crane boom segment is held together during transport to a dedicated welding station equipped for final welding into a welded crane boom segment 20.

Accordingly, an aspect of the present disclosure relates to an assembly station comprising:
- a longitudinally extending base configured to support the crane boom segment;
- a lifting device configured to position a component onto the longitudinally extending base, and/or a component onto another component;
- at least one longitudinal fixing device positioned centrally on the base and comprising at least one longitudinal clamping device configured for fixing of at least one component's back wall;
- at least one pair of lateral fixing devices positioned opposite on lateral sides of the longitudinally extending base; each lateral fixing device comprising at least one lower longitudinal clamping device configured for pressing at least one component's side wall and at least one upper longitudinal clamping device configured for pressing at least another component's side wall;
- at least one welding or tack welding device configured for welding or tack welding a component to another component produce a welded or tack welded crane boom segment.

Another aspect of the present disclosure relates to a method for manufacturing, preferably assembly, a crane boom segment comprising the steps of:
a. providing at least two components of a crane boom segment, including an upper component and lower component; each component having a back wall extending into a pair of oppositely disposed side walls;
b. placing the lower component on a longitudinally extending base in such a way that its side walls are oriented upwards;
c. positioning at least one longitudinal fixing device centrally along the base, wherein said longitudinal fixing device comprises at least one longitudinal clamping device; and fixing the lower component's back wall with said longitudinal clamping device;
d. positioning a pair of lateral fixing devices (60) on opposite lateral sides of the base, each lateral fixing device comprising a moveably arranged support arm comprising a lower longitudinal clamping device that has an extendable pressure piece and an upper longitudinal clamping device that has another extendable pressure piece; wherein each lateral fixing device is positioned in such a way that its lower lateral clamping device is aligned with the lower component's side wall; and extending the pressure piece from the opposite lower lateral clamping devices against an exterior surface of said lower component's side wall so that the lower component is fixed in place;
e. placing the upper component on the fixed lower component in such a way that its side walls are oriented downwards and align with the upwards oriented side walls of said lower component;
f. positioning, preferably another, longitudinal fixing device centrally along the base, and fixing the upper component's back wall with, preferably another, longitudinal clamping device;
g. adjusting the distance between the upper longitudinal clamping device and the lower longitudinal clamping device along a moveably arranged support arm in such a way that the upper longitudinal clamping device is aligned with an exterior of the upper component's side walls, and extending a pressure piece from said upper longitudinal clamping device to apply a compressive force onto said upper component's side wall so that the lower component is fixed in place;
h. optionally, pressing the upper component against the lower component with the least one longitudinal fixing device;
i. adjusting the pressure pieces of the opposite upper and lower clamping devices in such a way that an interior surface of the upper component's side walls aligns with an interior surface of the lower component's side walls; and,
j. welding or tack welding the upper component's side walls to an adjoining portion of the lower component's side walls to produce a welded or tack welded crane boom segment.

In an embodiment the longitudinally extending base may be configured to accommodate a specific profile of a crane boom segment. Preferably, the base may have a surface onto which the crane boom segment can be placed, such as the lower and/or upper component prior to assembly. This surface may be flat or curved to accommodate the geometrical shape of the lower component. Alternatively, a support may be provided between the surface of the base and the component placed thereon, as will be discussed further below

In an embodiment the longitudinally extending base may comprise a grid or a plurality of grids. The grids may be provided with openings such as slots for fixing the position of moveable fixing devices. An example of a grid-shaped base 40 is shown in **Figure 1****.** Alternatively, the base may comprise a continuous surface made from an arrangement of bars to improve the rigidity of the structure. The skilled person understands that the surface configurations of the base may be easily adjusted if it is rigid enough to ensure structural stability of the base to reliably support the weight of the crane boom segment.

In an embodiment the longitudinally extending base may comprise a support configured to accommodate specific profile of a crane boom segment. Preferably, said support may bear the weight of the crane boom segment and advantageously prevent movement of the components before fixing with fixing devices. Advantageously, the surface of said support may be flat or curved to accommodate the geometrical shape of the component.

In an embodiment the support may comprise mechanical means to conform to the convex-concave profile of a component. In some embodiments the support may comprise one or more rotatable elements, such as wheels or rollers, aligned along the surface of said support and configured to rotatably engage with the surface of the lower component. This may allow for the component to roll into the best position relative to the support such that placement of said component can be made easier. Additionally, this may prevent unwanted sideways displacement of the component when fixing the component with the further described lateral and/or longitudinal fixing device.

An example of a support 41 is shown in **Figure 4B****,** specifically, a support 41 comprising a two oppositely positioned support members configured to accommodate a curved wall of a component. The distance between the support members can be adjusted to accommodate different curvatures. Additionally, the support 41 comprises a numbers of rotating members configured for sideways rotation of a component, which may reduce damage when placing and/or removing the crane boom segment or components thereof onto said support 41.

In some embodiments the assembly station 10 may comprise a plurality of supports, for example two supports, three supports, four supports, and so on. Preferably, a plurality of such supports is employed to support the component at different lengthwise positions. Said supports may comprise provisions to securely receive and accommodate the shape of a component, specifically a lower component, which in turn enables more accurate positional adjustments of said lower component within the workstation.

An example of multiple supports is shown in **Figure 3****,** specifically the depicted longitudinally extending base 40 is shown to have five supports 41 positioned along the length of said base, more specifically, two supports 41 positioned at the front and rear ends, one central support 41 positioned halfway said base 40, and two supports 41 positioned halfway between the front and rear supports 41 and the central support 41. As a result the position of each support is scattered across the length of the entire geometry of the component and there are no weak spots that could damage or tilt the component during crane boom segment assembly. In a preferred embodiment the supports 41 may be configured to move along the of the longitudinally extending base so that their position can be adjusted to the length of the provided component.

In an embodiment the height adjustable base may comprise a lifting means configured to adjust the height of said adjustable base. In an embodiment the surface of the base may be raised or lowered so that the height, onto which said crane boom segment can be placed, can be adjusted in the vertical direction, i.e., perpendicular to the longitudinally extending base. To this end, the assembly station may comprise a lifting device configured to lift at least part of said longitudinally extending base. This has the advantage that the position of the base and any component placed thereon can be adjusted to the height of the operator for easier manoeuvring and handling of the components, preferably by improving access to an adjoining portion between the upper and the lower components.

Advantageously, the height adjustable base provides height adjustments to ease the positioning of the operator with respect to the length and width of the upper and/or lower components, providing effective ergonomic provisions for the execution of the adjoining of upper and lower's components side walls. Advantageously, the height adjustable base provides the operator with necessary provisions to be executing the task of adjoining upper and/or lower components from a very advantageous viewpoint, which in turn translates into increased focus by the operator and hence improved precision in executing welding activities.

The lifting device is not limited to any specific implementation. In some embodiments said lifting device may be mechanically, hydraulically or electrically operated, or a combination thereof. Preferably said lifting device may be electrically operated. Advantageously the lifting device comprises an interface for the operator to interact with, such as pressable buttons for raising or lowering the height adjustable base. An example of a lifting device 45 is shown in **Figure 4B****,** specifically, a lifting device 45 is shown comprising provisions for raising/lowering said lifting device 45, wherein said provisions leverage the usage of hydraulic platforms. In the illustrated embodiment linked folding supports in a pantograph mechanism fashion can be employed, wherein the upward motion is achieved by the application of pressure to the outside of the lowest set of supports, thus elongating the pantograph elements, which in turns allows to propel the lifting device 45 upwards. The person skilled in the art would recognize that the lifting device is not limited to solutions leveraging pantograph mechanisms, but that this is solely intended as exemplifying the functional interpretation of the lifting device.

In some embodiments the assembly station 10 may comprise a plurality of such lifting devices, for example two lifting devices, three lifting devices, four lifting devices, and so on. Preferably, a plurality of such lifting devices is employed to lift the longitudinally extending base at different lengthwise positions. An example of multiple lifting devices 45 is shown in **Figure 3****,** specifically the depicted longitudinally extending base 40 is shown to have three lifting devices 45, more specifically, two lifting devices 45 positioned at the front and rear ends and one central lifting device 45 positioned halfway said base 40. As a result the position of each lifting device is divided across the length of the entire geometry of the base to ensure a proper lifting. Although a greater number of lifting devices may ensure a more reliable lifting, too many devices can make the assembly station needlessly complex.

In a particular embodiment the lifting devices may be configured to lift independently, for example, if a tilt of the crane boom segment is desired for easier transport. Typically, however, the lifting devices may be configured to lift simultaneously so that level surface of the longitudinally extending base is ensured to prevent e.g. tilting of a crane boom segment.

In an embodiment the lifting devices may have a security feature to prevent raising/lowering when an operator is too close by. For example, a motion sensor or camera may detect the presence of an operator and engage a safety stop to prevent further movement of said lifting devices.

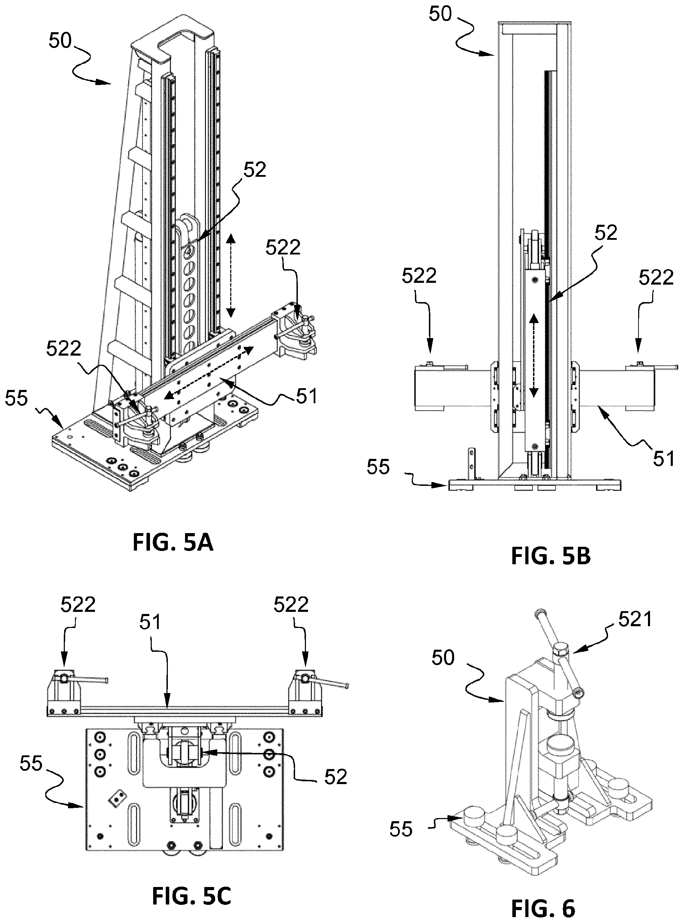

The longitudinal fixing device 50 will be further discussed below with reference to **Figures 5A, 5B** and **5C****,** which show a side view, a back view and a top view, respectively, of a preferred embodiment of such longitudinal fixing device 50. As is shown, the longitudinal fixing device 50 may comprise a support arm 51 provided with at least one clamping device 521, 522, a height adjustment mechanism 52, and a repositionable base 55.

The depicted longitudinal fixing device 50 is aimed at securing the positioning of the components of the crane boom segment in order to prevent longitudinal displacement during crane boom assembly, preferably, by fixing the upper component and/or lower component so that an upward and/or downward force can be exerted thereon aimed at keeping said upper component and/or lower component in the same position during said assembly. Additionally, the fixing may prevent mismatching of the components during pressing or fixing by the below-described lateral fixing devices.

To this end, the longitudinal fixing device may comprise at least one clamping device configured to fix a part of a component of the crane boom segment, specifically a part of an upper and/or lower component, more specifically a back wall of an upper and/or lower component. In a particular embodiment the longitudinal fixing device may comprise at least two clamping device configured to fix a section of a component, typically positioned in the same plane, so that an accidental bending of said section can be prevented.

This clamping device may comprise a, preferably extendable, pressure piece configured to extend towards an exterior and/or interior surface of a component and apply pressure onto said component or a section thereof so that it can be fixed in place. In an embodiment the pressure piece may comprise a moveably arranged body that has a head portion typically positioned at an end of said body, which is configured for exerting pressure onto a surface. Advantageously the head may have a surface area than the body size to increase the contact space onto which the force can be applied. The clamping device may further comprise a stop member typically positioned on the other end of said body, which is configured to limit or stop movement of said pressure piece, for example to limit the amount of pressure such that accidental deformation can be prevented.

The clamping device may further comprise a counterforce piece arranged on the side of the component's sidewalls e.g. interior or exterior, to counter the pressure exerted by the pressure piece. For example, the pressure piece may contact the exterior surface and press unto it while the counterforce piece is placed against the interior surface and stops the pressure piece from pressing too hard, or vice versa, i.e., the pressure piece on the interior surface and the counterforce piece against the exterior surface.

The clamping device may be manually operated or may be motorised, for example by connecting an actuator and corresponding electric motor configured for moving preferably extending said pressure piece. **Figure 5A** illustrates a mechanically operated jack as a preferred embodiment of such clamping device 522. However, the skilled person appreciates that such jack can be replaced by any other clamping device configured for mechanical clamping of a wall of a crane boom segment component. The jack has been identified as a preferred embodiment since it allows for exerting a controllable clamping force at low complexity and cost.

In an embodiment the longitudinal fixing device may comprise a single clamping device configured to fix said component in place. An example thereof is illustrated in **Figure 6****,** which shows an embodiment of a longitudinal fixing device 50 comprising a single lower longitudinal clamping device 521. The provision of a single lower longitudinal clamping device 521 may enable the safe securing of a lower component 21 at a single point or section thereof. This enables a precise positioning and longitudinal retention of said lower component 21 and limit any lateral displacements thereof, which might otherwise hinder accurate alignment of adjoining side walls of lower 21 and higher 22 components. This embodiment particularly advantageous for fixing of a lower component since it can be mounted close to the surface of the base 40. This embodiment if further advantageous for fixing a curved wall, specifically requiring the use of one or more longitudinal fixing devices adjusted to fix said wall at different heights and/or angles.

Referring again to the embodiment shown in **Figure 5A****,** the upper longitudinal fixing device 50 may comprise two or more clamping devices mounted 521 onto a support arm 51, preferably on opposite ends of said support arm 51. This latter embodiment allows for fixing different sections of a component, for example the back wall of said component at two sections thereof, for example at two corners of said component. This may provide for a more reliable fixing across the surface of said component that may prevent a bending of its walls. This embodiment particularly advantageous for fixing of an upper component since the position of the clamping device 521 can be raised to the level of the higher back wall. This embodiment is further advantageous for fixing of a flat wall with a large width so that the back wall can be fixed at different position to increase stability. Additionally, the at least two clamping devices 521 may be moveably mounted onto said support arm 51 such that the distance between said clamping devices 521 can be adjusted. This allows the longitudinal fixing device 50 to be applied to components with different widths and/or heights.

In an embodiment the longitudinal fixing device may comprise a height adjustment mechanism configured for adjusting the height of at least one clamping device. In a further embodiment a support arm may be mounted on such height adjustment mechanism so that the height of multiple, for example two or three, clamping devices can be adjusted simultaneously. An example of the such embodiment is discussed with reference to **Figure 5A****,** which shows a longitudinal fixing device 50 with a support arm 51 provided with two clamping devices 522, mounted at opposite ends of said support arm 51, wherein the support arm 51 is mounted onto a height adjustment mechanism 52 configured to change the position of said support arm 51 along a vertical axis so that the position of said clamping devices 521 can be aligned with the height of a component to be fixed. For example, in order to fix a flat back wall of an upper component, the depicted support arm 51 can be raised by the height adjustment mechanism 52 to the height of said upper component's back wall so that the clamping device can clamp the upper component. Alternatively, in order to fix a flat back wall of a lower component, the depicted support arm 51 can be lowered to the height of said lower component's back wall. This improves the accessibility of the assembly system to be adaptable for assembly of crane boom segments of different sizes and/or geometries, specifically of the components.

As is further shown in **Figure 5A****,** in an embodiment the longitudinal fixing device 50 may comprise a repositionable base 55 configured for repositioning of said fixing device 50, for example so that it can be moved and/or oriented towards to a section of a component of the crane boom segment, specifically a longitudinal end of a lower and/or upper component. In an embodiment the repositionable base 55 may be fixed into openings provided in the surface of the longitudinally extending base 40, for example, by the provision of studs placed through said overlapping openings provided in the repositionable base 55 and base 40. The skilled person understands that other means for fixing the repositionable base can be contemplated.

Another embodiment of a longitudinal fixing device 50 is discussed with reference to **Figure 6****,** which presents an exemplary embodiment of a longitudinal fixing device 50 without a height adjustment mechanism 52; this fixing device 50 comprises a, advantageously similar, longitudinal clamping device 522, as well as a repositionable base 55. The longitudinal clamping device may enable the safe securing of a lower component 21 so that precise positioning and longitudinal retention is achieved so that lateral displacements are prevented when another component is placed onto said lower component, specifically, an upper component.

In a further embodiment the longitudinal fixing device may be configured for pressing the upper component against the lower component. Preferably the pressing may be performed after said upper and lower components have been fixed by the hereinafter described lateral fixing devices. In a preferred embodiment the upper component can be pressed down onto the lower component by firstly fixing the upper component with one or more clamping device and secondly moving said upper component through the above-described heigh adjustment device.

In an exemplary embodiment a combination of the longitudinal fixing devices illustrated in **FIG. 5 and FIG.6** can be used. Specifically, first the lower component 21 can be fixed by the clamping device 521 of the longitudinal fixing device 50 of **FIG.6****.** Next the upper component 22, positioned on top of the lower component 21, can be fixed by the two clamping devices 522 of the longitudinal fixing device 50 of **FIG.5****.** In order to press the upper component 22 against the lower component 21, the height heigh adjustment device 52 can be instructed to move downwards, i.e., towards the lower component, so that a pressing downward force is exerted onto the upper component 22 via the clamping devices 522 of said longitudinal fixing device 50 of **FIG. 5****.** This may allow for reliably pressing the upper component onto the lower component without risk of a component moving longitudinally and/or laterally.

The skilled person understands that other means for pressing the upper component onto the lower component can be contemplated. For example, a moveable plate such as a hydraulic or electric press can be positioned above the upper component and/or below the lower component such that the components can be pressed against each other. Nonetheless, an embodiment making use of the longitudinal fixing device has the advantage of reducing the complexity of the assembly station and simplifying the assembly process.

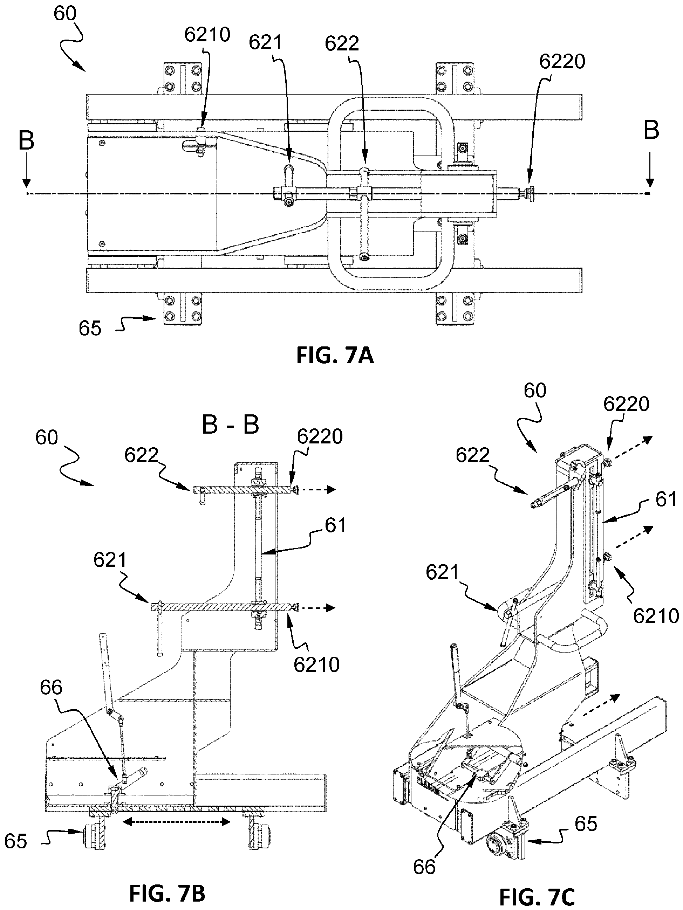

The lateral fixing device 60 will be further discussed below with reference to **Figures 7A, 7B** and **7C****,** which show a top view, a side view, and a perspective view, respectively, of a preferred embodiment of such lateral fixing device 60.

The depicted lateral fixing device 60 is aimed at securing the positioning of the components of the crane boom segment in order to prevent lateral displacement during crane boom assembly, preferably, by fixing the upper component and/or lower component so that a sideways force can be exerted thereon aimed at keeping said upper component and/or lower component in the same position during said assembly. Additionally, the fixing may prevent mismatching of the components during pressing or fixing by the above-described longitudinal fixing devices.

To this end, the lateral fixing device may comprise at least one clamping device configured to fix a side wall of a component of the crane boom segment, specifically an upper and/or lower component. Preferably, the lateral fixing device may comprise at least two clamping devices configured to fix a side wall of two adjoining components of the crane boom segment, specifically an upper and lower component.

The clamping device may comprise an extendable pressure piece configured to extend towards an exterior side wall surface of a component and apply a compressive force onto said surface so that the component can be fixed in place. The clamping device may be manually operated or may be motorised, for example by connecting an actuator and corresponding electric motor configured for moving said pressure piece. Preferably, the length of extension of the pressure piece is limited such that fine adjustments can be easier made. Coarse adjustment of the lateral fixing device's position relative to the component in the transverse direction can be advantageously performed by means of a coarse adjustment mechanism that will be described further below.

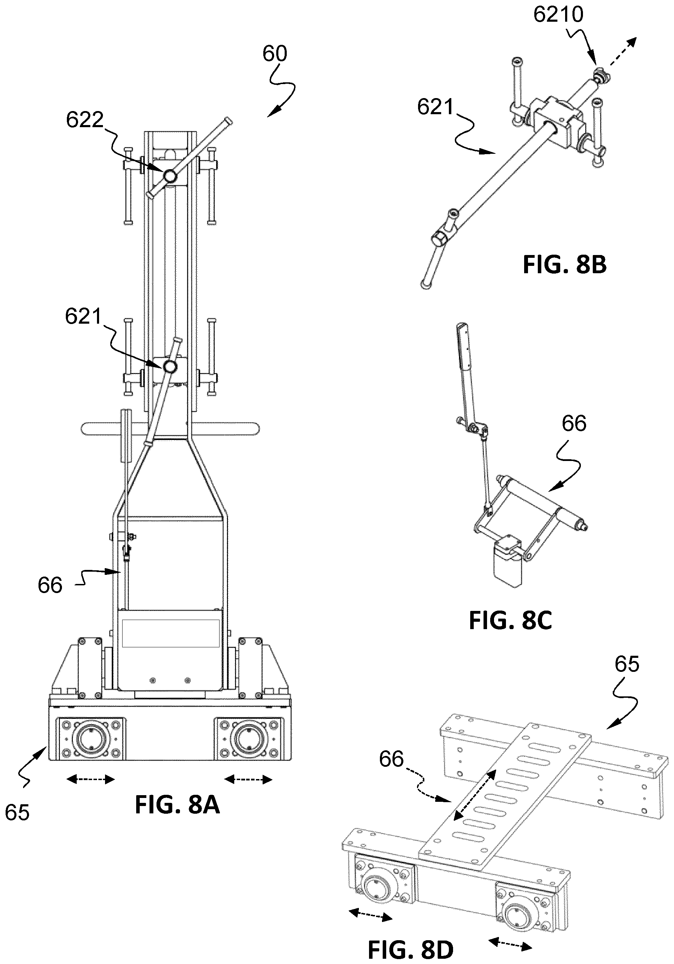

**Figure 8B** illustrates a manually operated jack as a preferred embodiment of such clamping device. However, the skilled person appreciates that such jack by any other clamping device configured for mechanical clamping of a wall of a crane boom segment component. The jack has just been identified as a preferred embodiment thereof. As further shown **Figure 8B** the dashed arrow indicated the direction in which the pressure piece can be extended .

With reference to **Figure 7B****,** an embodiment of the lateral fixing device 60 is shown comprising one upper lateral clamping device 622 comprising an upper pressure piece 6220, and one lower clamping device 621 comprises a lower pressure piece 6210, both upper and lower pressure pieces 6220, 6210 being configured to extend outwards in the same direction transverse to the frame of the lateral fixing device 60. Practically, when said lateral fixing device 60 is arranged perpendicular to the longitudinally extending base 40, for example as shown in **Figure 4A****,** said upper and lower pressure piece may extend transverse to the direction of the height adjustable base 40 so that they may apply a compressive force onto the exterior surface of components of a crane boom segment, specifically, said upper pressure piece 6220 may apply a compressive force onto the exterior surface of the upper component 22 and said lower extendable pressure piece 6210 may apply a compressive force onto the exterior surface of the lower component 21. This way both the lower 21 and upper component 22 components can be laterally fixed in place and further have their adjoining side walls easily aligned.

In an embodiment the lateral fixing device 60 may comprise a support arm 61 aimed at providing support to both upper lateral clamping device 622 and lower lateral clamping device 621, such that rotation of said lateral upper clamping device 622 and lower lateral clamping device 621 is restrained and ensures that said clamping devices are aligned for easier alignment with the components. Additionally, this may improve the lateral support that both lateral clamping device 622 and lower lateral clamping device 621 receive thereby making alignment of the adjoining side walls easier.

In an embodiment the distance between said upper longitudinal clamping device 622 and said lower longitudinal clamping device 621 can be adjustable along the length of said support arm 61 such that the lower longitudinal clamping device 621 can be aligned with the exterior surface of the lower component 21 and said upper longitudinal clamping device 622 may be aligned with the exterior surface of the lower component 21.

As better shown in **Figure 8A****,** specifically **Figure 8D****,** in an embodiment the lateral fixing device 60 may comprise a moveable base 65 equipped with movement elements, such as wheels or rollers, configured for moving the position of said fixing device 60 relative to the longitudinally extending base 40. Preferably, the movement elements may be mounted onto a guide track running alongside said base, for example rails or tracks with a width that accommodates the sizes of said movement elements. This allows for a controlled movement of the lateral fixing device 60.

In a preferred embodiment tracks may be arranged in a longitudinal direction running parallel alongside the base 40 so that the same distance between the fixing device 60 and base 40 can be ensured. Advantageously, the rails may enable movements on only one axis, for example leftwards or rightwards, and thereby prevent misalignment in another direction, for example forward or backward. For example, **Figure 8D** illustrates the possible movement direction of the moveable base 65 e.g. leftward or rightward with a dashed arrow underneath the movement elements.

As is further shown in **Figure 8A****,** specifically **Figure 8C****,** the fixing device 60 may further comprise a coarse adjustment mechanism 66 configured to adjust the position of the lateral fixing device 60 relative to the moveable base 65 in the transverse direction. This allows for the lateral fixing device 60 to be shifted towards or away from the component in larger step so that afterwards any fine adjustments can be made by means of the previously described upper and lower pressure pieces. The direction of the adjustment direction e.g. forward or backward, is indicated with a dashed arrow on **Figure 8D** along the moveable base 65.

In an embodiment the coarse adjustment mechanism 66 may comprise a lever for the operator to pull or push to engage a series of rods and pivots that transmit force applied to said hand lever into a blocking mechanism provided on the moveable base 65. For example, as shown in **Figure 8D****,** the moveable base 65 may have a number of slots that fit a locking element connected to said lever for locking the position of lateral fixing device 60 relative to the moveable base 65 This way the operator may reliably secure the position of the lateral fixing device 60.

The above-discussed lateral fixing device 60 may typically be arranged in pairs facing each other on opposite sides of the base 40, preferably symmetrically, so that simultaneous lateral support can be provided to the lower component 21 and the upper component 22. Such arrangement of lateral fixing device pairs 60 is shown for example on **Figure 4A** and **Figure 4B****,** i.e., wherein two lateral fixing device 60 are positioned symmetrically and aligned along reference line A-A. Advantageously, said lateral fixing device counter potential side forces deriving from stress within the material that might cause the upper component 22 to become misaligned with the lower component 21.

In some embodiments the assembly station 10 may comprise a plurality of such lateral fixing device pairs 60, for example two pairs, three pairs, four pairs, and so on. The optimal number of pair may be selected in accordance with the length of the crane boom segment 20. It shown on **Figure 1****,** in an embodiment the assembly station may comprise three lateral fixing device pairs 60, specifically, two lateral fixing device pairs 60 positioned at the front and rear ends of the longitudinally extending base 40 and one central lateral fixing device pair 60 positioned halfway said base 40. Although a greater number of lateral fixing device pairs may ensure a more reliable fixing, too many pairs can make the assembly station needlessly complex.

In some embodiments the assembly station comprises at least two pairs of lateral fixing devices positioned, preferably symmetrically, opposite along the longitudinally extending base, wherein a first fixing device pair is positioned near the front end of said base, a second fixing device pair is positioned near the rear end of said base.

In some embodiments the assembly station comprises at least three pairs of lateral fixing devices 60 positioned , preferably symmetrically, opposite along the longitudinally extending base , wherein a first fixing device pair is positioned near the front end of said base , a second fixing device pair is positioned near the rear end of said base, and a third fixing device pair is positioned about halfway between the front and rear ends of said base.

For example, as shown in any of **Figures 1** **or** **3** the assembly station 10 comprises lateral fixing devices 60 positioned on opposite lateral sides of the longitudinally extending base 40. More specifically, at least one pair of lateral fixing devices 60, which is set to be positioned lengthwise according to the length of said lower component 21 and/or upper component 22, and positioned to face each other on opposite sides of the longitudinally extending base 40, ultimately providing lateral support to said lower component 21 and upper component 22. As further shown, a pair of lateral fixing devices 60 can advantageously be positioned on opposite sides of a support 41 that is arranged on the base 40.

In an embodiment the assembly station may comprise a welding device configured for welding components to manufacture a welded crane boom segment, for example, by welding an upper component to an adjoining portion of a lower component to produce a welded crane boom segment. As used herein tack welding refers to a permanent, *i.e*., final weld that holds the components of the crane boom segment together.

In another embodiment the assembly station may comprise a tack welding device configured for tack welding components to manufacture a tack welded crane boom segment, for example, by tack welding an upper component to an adjoining portion of a lower component to produce a tack welded crane boom segment. As used herein tack welding refers to a temporary, *i.e*., non-final weld that holds the components of crane boom segment together prior to final welding.

Hereafter embodiments of the welding device and tack welding device will be discussed. To avoid repetition in writing, reference will be made to the welding device only. It should nonetheless be understood that the same embodiments may be implemented for a tack welding device unless otherwise specified. The assembly station of the present disclosure not limited to a particular configuration or model of welding device.

In an embodiment the welding or tack welding device may comprise a laser module configured to weld or tack weld the components of the crane boom segment to produce a welded or tack welded crane boom segment. In a preferred embodiment the welding or tack welding device may comprise a solid-state laser. Laser tacking areas produced with the help of a solid-state laser and angled laser optics mounted on a mechanically/electrically movable carriage can produce a very accurate welding.

In an embodiment the welding device may comprise a reaction arm configured to move said welding device throughout the assembly station and further operate said welding device during the tack welding process. An example of a welding device 30 supported by a reaction arm 35 is shown in **Figure 4B****,** which illustrates said welding device 30 being positioned at the rear of the assembly station 10 so that it does not obstruct the operator during assembly of the crane boom segment. As is shown, the reaction arm 35 may have the welding device 30 connected at the lower end, whereby said reaction arm 35 is safely anchored to an upper frame structure which enables said reaction arm 35 to be moveable within the workstation volume of the workstation.

In an embodiment the reaction arm may be anchored to an upper frame structure which is configured to enable linear motions of said reaction arm 35 in at least 3 degrees of freedom within the workstation volume of the assembly workstation 10. Moreover, said welding device 30 connected to said support arm 35 is configured to decrease and/or increase the distance between said welding device and said lower component 21 or upper component 22. Preferably, said welding device 30 may be configured to protract and/or retract longitudinally with respect to the height of said lower component 21 and upper component 22. The latter may advantageously enable operators to decrease setup times by allowing precise positioning of the welding device 30 with respect to the side walls of the components.

In an embodiment the reaction arm may comprise a camera. This way the reaction arm may be operated by an operator, and the operator may visualize the welding line and its surroundings by auxilium of said camera. In some embodiments the camera may be integrated within the reaction arm in combination with the welding device. This integration advantageously allows operators to be supported through camera guidance during welding operations, which in turns translates into higher precision of the final welding operation. The camera may also be integrated into the welding device so that the welding process can be accurately visualised.

In an embodiment, the welding device and/or reaction arm may be remotely operated via video feed produced by said camera. Advantageously, this enables operators to have visual reference of the weld line and enables them to perform a more accurate welding, specifically, by predetermining each step of the tack welding of the lower component and upper component into a boom crane segment 20.

In some embodiment the camera may be oriented in the direction of the adjoining edges of the components, preferably the upper and lower components, such that an in-depth perspective can be captured and stored. In some embodiments the welding device may also comprise provisions for a monitor configured to display the output stream of said camera. Advantageously, the orientation of said camera relative to the welding device are displayed in the output stream to prevent operational errors. In some embodiment the welding device may comprise an operator interface configured for operating said welding device and specifically said reaction arm. The operator interface may include manually operated controls for any of the operatively connected system, specifically the reaction arm, wherein said controls include a guided user interface (GUI) and display menus for enabling user operated functions.

In an embodiment a reaction arm may be at least partially automated, wherein the operator interface automatically provides an analysis of the assembled scanned crane boom segment and only requires operator input to determine and/or verify welding parameters for the preferably tack welding of adjoining portions of components of said crane boom segment.

In an embodiment the reaction arm may be fully automated, wherein said reaction arm automatically determines the preferably tack welding positions on adjoining portions of components of said crane boom segment and performs said preferably tack welding process automatically. The reaction arm can move linearly in an encapsulated housing and be started via a programmed time control. The position of the tacking position can be controlled beforehand via a monitor. This shows the exact position of the later tacking point by means of a line projection, so that the operator can see in advance where the later tacking point will be welded.

In an embodiment the welding device comprising one or multiple angled laser beam welding devices which are leveraged to provide visual guidance to operators executing the welding operations. In some embodiments, said laser angled optic may be equipped with laser compensation techniques to minimize the amount of scattering present onto upper or lower boom segment prior welding operations. Advantageously, this allows operators to provide enhanced precision with regard to the identification of the welding line, and thus enables the operator to achieve higher welding precision.

In some embodiments the welding device may comprise a marking device, preferably a line monitor laser, configured for marking the position of a desired laser tack weld on an adjoining portion between the components of the crane boom segment, specifically the upper component and lower component, and a laser beam welding device, preferably a solid-state laser, configured for preferably automated tack welding said components at the positioned marked by the marking device.

In some embodiments, the welding device may be configured for producing a laser tacking area with a width of 0.5 mm to 5.0 mm, preferably 1.0 mm to 4.5 mm, more preferably 1.5 mm to 4.0 mm, even more preferably 2.0 mm to 3.5 mm, even more preferably 2.0 mm to 3.0 mm, for example 2.5 mm. The width as used herein refers to the area between the laser tacked components, for example, the distance between the adjoining side walls of a first component and a second component.

In some embodiments, the welding device may be configured for producing a laser tacking area with a length of 30.0 mm to 50.0 mm, preferably 32.5 mm to 47.5 mm, more preferably 35.0 mm to 45.0 mm, even more preferably 37.5 mm to 42.5 mm, for example 39.0 mm, 40.0 mm or 41.0 mm. The length as used herein refers to the area between the laser tacked components, for example, the distance along the adjoining side walls of a first component and a second component.

In some embodiments, the welding device may be configured for producing a laser tacking area with a depth of 2.0 mm to 8.0 mm, preferably 2.5 mm to 7.5 mm, more preferably 3.0 mm to 7.0 mm, even more preferably 3.5 mm to 6.5 mm, even more preferably 4.0 mm to 6.0 mm, for example 4.5 mm, 5.0 mm or 5.5 mm

## Claims

1. A method for assembly of a crane boom segment (20) for a telescopic crane,
the method comprising the steps of:
a. providing at least two components of a crane boom segment (20), including a lower component (21) and an upper component (22), each component (21, 22) having at least a back wall extending into a pair of oppositely disposed side walls;
b. placing the lower component (21) on a longitudinally extending base (40) in such a way that its side walls are oriented upwards;
c. positioning at least one longitudinal fixing device (50) centrally along the base (40), wherein said longitudinal fixing device (50) comprises at least one longitudinal clamping device (521); and fixing the lower component's back wall with said longitudinal clamping device (521);
d. positioning a pair of lateral fixing devices (60), preferably symmetrically, on opposite lateral sides of the base (40), each lateral fixing device (60) comprising a moveably arranged support arm (61) comprising a lower longitudinal clamping device (621) that has an extendable pressure piece (6210) and an upper longitudinal clamping device (622) that has another extendable pressure piece (6220); wherein each lateral fixing device (60) is positioned in such a way that its lower lateral clamping device (621) is aligned with the lower component's side wall; and
extending the pressure piece (6210) from the opposite lower lateral clamping devices (621) against an exterior surface of said lower component's side wall so that the lower component (21) is fixed in place;
e. placing the upper component (22) onto the fixed lower component (21) in such a way that its side walls are oriented downwards and aligned with the upwards oriented lower component's side walls;
f. positioning, preferably another, longitudinal fixing device (50) centrally along the base (40), and fixing the upper component's back wall with, preferably another, longitudinal clamping device (522);
g. adjusting the distance between the lower lateral clamping device (621) and the upper lateral clamping device (622) along the support arm (61) in such a way that said upper lateral clamping device (622) is aligned with the upper component's side wall; and
extending the pressure piece (6220) from opposite upper lateral clamping devices (622) against an exterior surface of said upper component's side wall so that the upper component (22) is fixed in place;
h. pressing the upper component (22) against the lower component (21), preferably with the least one longitudinal fixing device (50);
i. adjusting the pressure pieces (6220, 6210) of opposite upper (622) and lower (621) clamping devices in such a way that an interior surface of the upper component's side walls aligns with an interior surface of the lower component's side walls; and,
j. welding or tack welding, the upper component's side walls to an adjoining portion of the lower component's side walls to produce a welded or tack welded crane boom segment (20).

2. An assembly station (10) for assisted assembly of a crane boom segment (20) for a telescopic crane, said segment (20) comprising of at least two components, including a lower component (21) and an upper component (22); each component having at least a back wall extending into a pair of oppositely disposed side walls;
the assembly station (10) comprising:
- a longitudinally extending base (40) configured to support the crane boom segment (20);
- a lifting device configured for placing the lower component (21) onto the base (40) and/or the upper component (22) onto the lower component (21);
- at least one longitudinal fixing device (50) positioned centrally along the base (40) and comprising at least one longitudinal clamping device (521, 522) configured for fixing of at least one component's back wall;
- at least one pair of lateral fixing devices (60) positioned, preferably symmetrically, opposite on lateral sides of the base (40);
each lateral fixing device (60) comprising a moveably arranged support arm (61) comprising a lower longitudinal clamping device (621) that has an extendable pressure piece (6210) and an upper longitudinal clamping device (622) that has another extendable pressure piece (6220);
wherein the distance between said lower and upper clamping devices (621, 622) is adjustable along the length of said support arm (61) so that the lower longitudinal clamping device (621) can be aligned with the lower component's side wall and the upper longitudinal clamping device (622) can be aligned with the upper component's side wall;
wherein the pressure pieces (6210, 6220) from opposite lateral clamping devices (621, 622) are configured to extend against an exterior surface of each component's opposite side walls so that the lower and upper components (21, 22) can be fixed in place and an interior surface of the upper component's side walls can be aligned with an interior surface of the lower component's side walls;
- a welding or tack welding device (30) configured for welding or tack welding the upper component's side walls to an adjoining portion of the lower component's side walls to produce a welded or tack welded crane boom segment (20).

3. The method or system according to one of the preceding claims, wherein the longitudinally extending base (40) comprises a lifting means configured to adjust the height of said adjustable base so that an operator can access the adjoining portions of the lower and upper component's side walls.

4. The method or system according to one of the preceding claims, wherein the longitudinal fixing device (50) comprises a height adjustment mechanism (52) configured for adjusting the height of at least one longitudinal clamping device (521, 522); preferably so that the upper component's back wall can be fixed with said clamping device (521, 522).

5. The method or system according to preceding claim 4, wherein the height adjustment mechanism (52) is configured for pressing the upper component (22) against the lower component (21) through the least one longitudinal clamping device (521, 522).

6. The method or system according to one of the preceding claims, wherein the longitudinal fixing device (50) comprises a support arm (51) comprising at least two longitudinal clamping devices (521, 522) configured for fixing a component's back wall at two points, preferably at opposite sides of the same back wall.

7. The method or system according to one of the preceding claims, wherein the longitudinal fixing device (50) comprises a repositionable base (55) configured for repositioning said fixing device 50 centrally along the base (40), preferably along the length of the base (40).

8. The method or system according to one of the preceding claims, wherein the assembly station (10) comprises at least one pair of longitudinal fixing devices (50) positioned symmetrically opposite on longitudinal sides of the base (40), preferably at a front end and a rear end of a component, wherein at least one longitudinal fixing device (50) is configured for fixing the lower component's back wall and at least one longitudinal fixing device (50) is configured for fixing the upper component's back wall.

9. The method or system according to one of the preceding claims, wherein the lateral fixing device (60) comprises a moveable base (65) equipped with movement elements configured for moving the position of said fixing device (60) relative to the longitudinally extending base (40), preferably along the length of the base (40).

10. The method or system according to preceding claim 9, wherein the moveable base is mounted on a guide track running alongside the length of the base (40), preferably running parallel thereto.

11. The method or system according to one of the preceding claims, wherein the lateral fixing device (60) comprises a coarse adjustment mechanism 66 configured to adjust the position of the lateral fixing device 60 relative to the moveable base 65 in the transverse direction.

12. The method or system according to one of the preceding claims, wherein the assembly station (10) comprises at least three pairs of lateral fixing devices (60) positioned along the longitudinally extending base (40), wherein a first fixing device pair (60) is positioned near the front end of said base (40), a second fixing device pair (60) is positioned near the rear end of said base (40), and a third fixing device pair (60) is positioned about halfway between the front and rear ends of said base (40).

13. The method or system according to one of the preceding claims, wherein the welding device (30) comprises a reaction arm (35) configured to move said welding device (30) through the assembly station (10) and operate said welding device (30) during the welding or tack welding process.

14. The method or system according to one of the preceding claims, wherein the welding device (30) comprises a marking device, preferably a line monitor laser, configured for marking the position of a desired tack weld, and said welding device (30) is configured for automated welding or tack welding at one or more positions marked by said marking device.

15. The method or system according to one of the preceding claims, wherein the welding device (30) comprises a camera configured to produce a video output of the welding device (30) and/or marking device; and wherein said welding device (30) and/or marking device are configured to be remotely controlled based on said video output.
